# EUROPÄISCHE PATENTANMELDUNG

(11) **EP 2 527 308 A1**
(43) Veröffentlichungstag der Anmeldung: **28.11.2012**
(21) Anmeldenummer: 11167678.9
(22) Anmeldetag: 26.05.2011
(51) Int. Cl.: C04B 24/12, C04B 28/02

(54) **Erhärtungsbeschleuniger für mineralische Bindemittel**

(71) Anmelder: Sika Technology AG, 6340 Baar (CH)
(72) Erfinder: Marazzani, Beat, 8102 Oberengstringen (CH); Kurz, Christophe, 8165 Oberweningen (CH); Mäder, Gilbert, 8460 Marthalen (CH); Bürge, Christian, 5503 Schafisheim (CH)
(74) Vertreter: Sika Patent Attorneys

(57) **Zusammenfassung**

Die vorliegende Erfindung betrifft die Verwendung eines Aminoalkohols **A** und/oder eines Salzes des Aminoalkohols **A** Hals Erhärtungsbeschleuniger für mineralische Bindemittel, insbesondere zementöse Bindemittel, wobei der Aminoalkohol **A** eine Struktur gemäss Formel 1 aufweist: 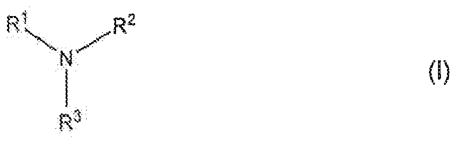 und wobei
a) R¹ und R² unabhängig voneinander je eine Alkanolgruppe unit 3 - 4 Koh lenstoffatomen darstellen,
b) R³ ein organischer Rest mit 1 - 8 Kohlenstoffatomen ist,
c) R³ verschieden ist von R¹ und/oder R².

## Beschreibung

### Technisches Gebiet

Die Erfindung betrifft die Verwendung eines Aminoalkohols und/oder eines Salzes des Aminoalkohols als Erhärtungsbesch!eun!gerfür mineralische Bindemittel, insbesondere zementöse Bindemittel. Weiter bezieht sich die Erfindung auf eine Zusammensetzung enthaltend ein mineralisches Bindemittel und einen Aminoalkohol sowie auf ein Verfahren zur Herstellung der Zusammensetzung. Ein zusätzlicher Aspekt der Erfindung betrifft einen ausgehärteten Formkörper.

### Stand der Technik

Erhärtungsbeschleuniger werden in mineralischen Bindemitteln eingesetzt um das Erhärten von Bindemittelzusammensetzungen nach dem Anmachen mit Wasser zu beschleunigen. Dies kann z.B. notwenig sein, um ein Betonieren bei tiefen Temperaturen zu ermöglichen oder um die Frühfestigkeit von Mörtel-oder Betonzusammensetzungen zu erhöhen.

In diesem Zusammenhang sind verschiedene Substanzen bekannt, welche das Erhärten von mineralischen Bindemitteln, insbesondere zementösen Bindemitteln, beschleunigen. Gebräuchlich sind beispielsweise Erhärtungsbeschleuniger basierend auf Aminoalkoholen, Halogeniden, Pseudohalogeniden, Nitriten, Nitraten, Aluminiumsalzen, Alkalihydroxiden, Erdalkalihydroxiden, Glykolen, Glyzerin oder α-Hydroxycarbonsäuren.

Die WO 2003/000617 A1 (Sika AG) beschreibt z.B. einen Erhärtungsbeschleuniger basierend auf einem Aminoalkohol, einem anorganischen Nitrat, einer Carbonsäure und einem Polyol. Als Aminoalkohole sind dabei beispielsweise Monoethanolamin, Diethanolamin, Triethanolamin, N-Methyldiethanolamin und Triisopropanolamin genannt.

Bekannte Erhärtungbeschleuinger weisen jedoch verschiedene Nachteile auf. So besteht bei Halogeniden, Pseudohalogeniden, Nitriten und Nitraten in Beton die Gefahr von Spannungsrisskorrosion an Spannstählen. Alkalihydroxide, Aluminiumsalze, Glykole und Glyzerin zeigen häufig ein unerwünschtes Ansteifverhalten und α-Hydroxycarbonsäuren sind dosierungssensitiv. Bekannte Aminoalkohole sind diesbezüglich zwar vorteilhafter, vermögen aber in Bezug auf die Erhärtungsbeschleunigung nicht vollständig zu überzeugen.

Es besteht daher nach wie vor Bedarf nach verbesserten Erhärtungsbeschleunigern für mineralischen Bindemittel, welche die vorstehend genannten Nachteile nicht aufweisen.

### Darstellung der Erfindung

Aufgabe der Erfindung ist es daher, einen verbesserten Erhärtungsbeschleuniger für mineralische Bindemitteizusammensetzungen zur Verfügung zu stellen. Der erfindungsgemässe Erhärtungsbeschleuniger soll gegenüber bekannten Erhärtungsbeschleunigern insbesondere höhere Frühdruckfestigkeiten von Mörtel- und/oder Betonzusammensetzungen ermöglich.

Überraschenderweise wurde gefunden, dass die erfindungsgemässe Aufgabe gemäss Anspruch 1 gelöst werden kann durch Verwendung eines Aminoalkohols **A** der Formel I 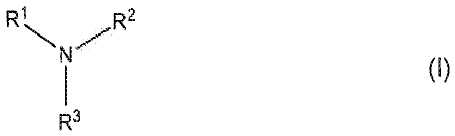 und/oder eines Salzes des Aminoalkohols **A** als Erhärtungsbeschleuniger für mineralische Bindemittel, insbesondere zementöse Bindemittel, wobei
a) R¹ und R² unabhängig voneinander je eine Alkanolgruppe mit 3 - 4 Kohlenstoffatomen darstellen,
b) R³ ein organischer Rest mit 1 - 8 Kohlenstoffatomen ist, und wobei
c) R³ verschieden ist von R¹ und/oder R².

Wie sich gezeigt hat, können mit den erfindungsgemässen Erhärtungsbeschleunigern unerwartet hohe Frühdruckfestigkeiten erreicht werden. Im Vergleich mit einer Nullprobe ohne zugesetzten Erhärtungsbeschleuniger lassen sich mit den erfindungsgemässen Erhärtungsbeschleunigern die Frühdruckfestigkeiten nach 24 Stunden oder 1 Tag um bis zu 53% steigern. Auch verglichen mit herkömmlichen Aminoalkoholen ergeben sich mit den erfindungsgemässen Aminoalkoholen **A** der Formel I und/oder deren Salzen überraschenderweise signifikant höhere Frühfestigkeiten.

Die Aminoalkohols **A** und/oder deren Salze können als Erhärtungsbeschleuniger in verschiedensten mineralischen Bindemittel verwendet werden. Dies können insbesondere verschiedenste Zementsorten (CEM I, CEM II, CEM III, CEM IV**,** CEM V, sogenannte "grüne Zement" und Beiit-Zement) für Transport-, Orts-, Fertigteil- und Spritzbeton, sowie Mörtelanwendungen wie Reparaturmörtel, Grouts, Spritzmörtel und dergleichen sein.

Die Verarbeitbarkeit der mineralischen Bindemittel wird durch den Zusatz der erfindungsgemässen Aminoalkohole **A** und/oder deren Salze kaum oder gar nicht negativ beeinflusst. Des Weiteren sind die erfindungsgemässen Aminoalkohole **A** und/oder deren Salze auch kompatibel mit einer Vielzahl von anderen gängigen erhärtungsbeschieunigenden Substanzen und Prozesschemikalien. Die Aminoalkohols **A** und/oder deren Salze sind also äusserst flexibel einsetzbar.

Zudem wurde gefunden, dass die erfindungsgemässen Erhärtungsbeschleuniger bezüglich unerwünschtem Ansteifverhalten von zementösen Systemen unproblematisch sind. Weiter kann aufgrund der Zusammensetzung der erfindungsgemässen Erhärtungsbeschleuniger davon ausgegangen werden, dass die Gefahr von Spannungsrisskorrosion von Spannstählen in Betonbauten bei Verwendung der Erhärtungsbeschleuniger gering ist. Des Weiteren ist die Dosierungssensitivität im Vergleich zu bekannten Erhärtungsbeschleunigern gering.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung eines Aminoalkohols **A** und/oder eines Salzes des Aminoalkohols **A** Hals Erhärtungsbeschleuniger für mineralische Bindemittel, insbesondere zementöse Bindemittel, wobei der Aminoalkohol **A** eine Struktur gemäss Formel aufweist: 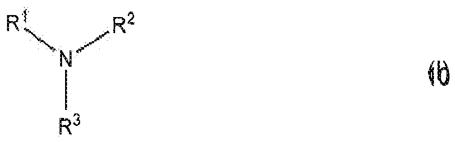 und wobei
a) R¹ und R² unabhängig voneinander je eine Alkanolgruppe mit 3 - 4 Kohlenstoffatomen darstellen,
b) R³ ein organischer Rest mit 1 - 8 Kohlenstoffatomen ist,
c) R³ verschieden ist von R¹ und/oder R².

Unter dem Ausdruck "mineralisches Bindemittel" ist insbesondere ein Bindemittel zu verstehen, weiches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Unter einem "zementösen Bindemittel" wird vorliegende insbesondere ein Bindemittel oder eine Bindemittelzusammensetzung mit einem Anteil von wenigstens 5 Gew,-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II und/oder CEM IIIA (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu ≥ 95 Gew.-% aus hydraulischem Bindemittel, insbesondere aus Zementklinker.

Es kann aber auch vorteilhaft sein, wenn das Bindemittel oder die Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehie und/oder Pigmente enthalten. In einer vorteilhaften Ausführungsform enthält das mineralische Bindemittel 5-95 Gew.-%, insbesondere 5-65 Gew.-%, besonders bevorzugt 15-35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oderZementklinker, und ein latenthydraulisches und/oder puzzolanisches Bindemittel, bevorzugt Schlacke und/oder Flugasche. Der Anteil des latenthydraulisches und/oder puzzolanisches Bindemittel beträgt dabei besonders bevorzugt 5-65 Gew.-%, besonders bevorzugt 15-35 Gew.-%, während wenigstens 35 Gew.-%, im Speziellen wenigstens 65 Gew.-%, des hydraulischen Bindemittels vorliegen,

Der Begriff "Erhärtungsbeschleuniger" steht insbesondere für eine Substanz, welche, falls einem mineralischen Bindemittel zugesetzt und verglichen mit einer Nullprobe ohne zugesetzte Substanz bzw. ohne Erhärtungsbeschleuniger, zu einer Erhöhung der Frühdruckfestigkeit oder Anfangsfestigkeit des mineralischen Bindemittels nach dem Anmachen führt. Dies insbesondere nach 24 Stunden.

Unter "Frühdruckfestigkeit" wird im vorliegenden Zusammenhang insbesondere eine Druckfestigkeit nach 24 Stunden verstanden. Die Druckfestigkeiten sind insbesondere entsprechend der Norm EN 12390-3 definiert.

Der Ausdruck "organischer Rest mit 1 - 8 Kohlenstoffatomen" steht insbesondere für lineare oder verzweigte Kohlenwasserstoffreste mit 1 bis 8 C-Atomen, welche gegebenenfalls ein oder mehrere Heteroatome und/oder gegebenenfalls eine oder mehrere C-C-Mehrfachbindungen und/oder gegebenenfalls cycloaliphatische und/oder aromatische Anteile aufweisen kann. Als Heteroatome können insbesondere N, O, P, S und/oder Si vorliegen.

Eine "Alkanolgruppe" verfügt vorliegend über eine oder mehrere Hydroxygruppen an einem gesättigten Alkylrest mit 3 - 4 Kohlenstoffatomen. Mit Voteil verfügt die Alkanolgruppe über genau eine Hydroxygruppe und/oder 3 Kohlenstoffatome. Der Alkylrest kann dabei grundsätzlich linear oder verzweigt sein. Die Hydroxygruppen können grundsätzlich als primäre und/oder sekundäre OH-Gruppen vorliegen. Die Alkanolgruppen sind insbesondere über ein Kohlenstoffatom an das N-Atom des Aminoalkohols **A** gebunden.

Bevorzugt steht R¹ und/oder R² für eine Isopropanolgruppe. Wie sich gezeigt hat, ist es besonders vorteilhaft, wenn R¹ und R² je für eine Isopropanolgruppe stehen. Isopropanolgruppen können auch als 2-Propanolgruppen bezeichnet werden. Damit treten die erfindungsgemässen Vorteile besonders stark in Erscheinung.

Prinzipiell ist es aber auch möglich, dass R¹ und/oder R² für eine n-Propanolgruppe oder 1-Propanolgruppe stehen. Dabei ist es auch möglich, Aminoalkohole **A** vorzusehen, bei welchen z.B. R¹ für eine n-Propanolgruppe und R² für eine auch eine Isopropanolgruppe steht.

R³ ist mit Vorteil eine Alkylgruppe, eine Cycloalkylgruppe, eine Alkylarylgruppe, eine Arylgruppe, eine Alkoxygruppe, eine Alkanolgruppe, oder eine Aminoalkylgruppe, Im Speziellen ist R³ keine Aminoalkoholgruppe.

Besonders bevorzugt stellt R³ eine Alkylgruppe dar, insbesondere eine gesättigte Alkylgruppe. Besonders bevorzugt ist R³ eine Alkylgruppe mit 1 - 6 Kohlenstoffatomen, insbesondere mit 1 - 3 Kohlenstoffatomen.

Wie sich gezeigt hat, liegt ein Molekulargewicht M_{w} des Aminoalkohols **A** vorteilhafterweise im Bereich von 120 - 500 g/mol, insbesondere 120 - 300 g/mol, bevorzugt 130 - 300 g/mol, noch weiter bevorzugt 140 - 200 g/mol. Ein Molekulargewicht pro Alkoholgruppe (M_{w}/Anzahl OH) des Aminoalkohols **A** liegt dabei mit Vorteil im Bereich von 60 - 250 g/mol, insbesondere 65-150 g/mol, bevorzugt 65-100 g/mol. Die Molekulargewichte beziehen sich dabei auf die Aminoalkohole **A** als solchen. Das Molekulargewicht eines allfälligen Gegenions in einem Salz des Aminoalkohols **A** ist entsprechend nicht mitgerechnet.

Aminoalkohole mit derartigen Molekulargewichten zeigen eine optimale Wirkung als Erhärtungsbeschleuniger.

Besonders bevorzugt ist der Aminoalkohol **A** ein β-Aminoalkohol. Damit ist insbesondere gemeint, dass die Amingruppe im ersten Aminoalkohol **A** relativ zur Hydroxylgruppe in β-Position oder an einem β-Kohlenstoffatom gebunden ist.

Bei mehreren Alkoholgruppen und/oder Amingruppen gilt dies insbesondere für sämtliche dieser funktionellen Gruppen. Entsprechend sind die Hydroxylgruppe der Alkoholgruppe und das Stickstoffatom der Amingruppe insbesondere an zwei unterschiedlichen und direkt benachbarten Kohlenstoffatomen gebunden.

Gemäss eine vorteilhaften Ausführungsform ist der Aminoalkohol **A** ein N-Alkyldiisopropanolamin und/oder ein Salz davon. Besonders vorteilhaft ist ein N-Alkyldiisopropanolamin mit einer Alkylgruppe mit 1 - 6, insbesondere mit 1 - 3, Kohlenstoffatomen.

Insbesondere ist der Aminoalkohol **A** N-Methyldiisopropanolamin, N-Ethyldiisopropanolamin oder N-Propyldiisopropanolamin. Dabei ist N-Methyldiisopropanolamin am meisten bevorzugt.

Der Aminoalkohol **A** und/oder das Salz des Aminoalkohols **A** kann z.B. als Reinsubstanz, insbesondere mit einer Reinheit von ≥ 95 Gew.-%, eingesetzt werden.

Vorteilhafterweise wird der Aminoalkohol **A** und/oder das Salz des Aminoalkohols **A** in flüssiger Form verwendet, insbesondere als Lösung oder Dispersion. Bevorzugt sind wässrige Lösungen und/oder Dispersionen mit einem Anteil des Aminoalkohols **A** und/oder des Salzes von 5-99 Gew.-%, bevorzugt 20 - 70 Gew.-%, insbesondere 40 - 60 Gew.-%. Damit wird eine optimale Vermischung erreicht.

Grundsätzlich kann der Aminoalkohol **A** und/oder das Salz des Aminoalkohols **A** aber auch in fester Form eingesetzt werden, z.B. als Pulver und/oder auf einem festen Trägermaterial aufgebracht.

Gemäss einer vorteilhaften Variante wird ein Salz des Aminoalkohols **A** eingesetzt. Geeignet sind z.B. Salze mit Schwefelsäure, Salpetersäure, Phosphorsäure, Kohlensäure, Natriumdihydrogenphosphat, Natriumhydrogencarbonat, Sulfaminsäure, Salzsäure und/oder organische Säuren mit C₁-C₄ pro Carbonsäurengruppe, wie beispielsweise Ameisensäure, Weinsäure, Milchsäure, Zitronensäure und/oder Oxalsäure. Bevorzugt sind Salze von Carbonsäuren mit C₁-C₃ pro Carbonsäuregruppe, insbesondere Essigsäure. Das Salz des Aminoalkohols **A** kann dabei auch in Kombination mit reinem oder neutralem Aminoalkohol **A** eingesetzt werden.

In einer anderen vorteilhaften Ausführungsform wird der Aminoalkohol **A** alls solcher eingesetzt. In diesem Fall ist der Aminoalkohol **A** kein Salz. Dies erleichtert insbesondere die Verwendung des Aminoalkohols **A**.

Mit Vorteil wird der Aminoalkohol **A** und/oder dessen Salz in einer Menge von 0.01 - 5 Gew.-%, insbesondere 0.05 - 2 Gew.-%, bevorzugt 0.05 - 0.6 Gew.-%, bezogen auf das Gewicht des mineralischen Bindemittels, verwendet. Wie sich gezeigt hat, wird bei derartigen Anteilen insbesondere eine besonders hohe Steigerung der Frühfestigkeit erreicht. Andere Anteile sind aber grundsätzlich auch möglich.

Gemäss einer weiteren vorteilhaften Ausführungsform wird der Aminoalkohol **A** und/oder dessen Salz in Kombination mit wenigstens einer weiteren erhärtungsbeschleunigenden Substanz eingesetzt.

Grundsätzlich können hierbei eine Vielzahl von dem Fachmann bekannten Substanzen eingesetzt werden. Besonders vorteilhaft umfasst die weitere erhärtungsbeschleunigende Substanz jedoch ein oder mehrere der folgenden Vertreter umfasst:
a) ein oder mehrere weitere Aminoalkohole und/oder Salze davon, welche sich insbesondere vom jeweils verwendeten Aminoalkohol **A** unterscheiden.
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere α-Hydroxycarbonsäuren
f) ein oder mehrere Alkali- und/oder Erdalkalihalogenide
g) Glyzerin und/oder Glyzerinderivate
h) ein oder mehrere Glykole und/oder Glykolderivate
i) ein oder mehrere Aluminiumsalze
j) ein oder mehrere Alkali- und/oder Erdalkalihydroxide.

Wie sich gezeigt hat, sind die erfindungsgemässen Aminoalkohole **A** und/oder Salze mit diesen Vertretern von weiteren erhärtungsbeschleunigenden Substanzen im Allgemeinen gut kompatibel. Damit lässt sich beispielsweise eine flexible Anpassung an spezielle Verwendungen realisieren.

Als weitere erhärtungsbeschleunigende Substanz sind insbesondere weitere Aminoalkohole wie z.B. N-Ethyldiethanolamin (EDEA), Triethanolamin (TEA), 2-(Diisopropylamino)ethanol, 2-(2-Aminoethylamino)ethanol, N,N'-Bis-(2-hydroxyethyl)ethylendiamin, N-Methyldiethanolamin (MDEA), Diethanolamin (DEA), 2-Amino-2-methyl-1,3-propandiol (AMPD), Tris-(hydroxymethyl)-aminomethan (TRIS), 3-Amino-1,2-propandiol (APD) und/oder 2-(2-Aminoethoxy)ethanol geeignet.

Besonders bevorzugt als weitere Aminoalkohole sind Tris-(hydroxymethyl)-aminomethan (TRIS), N-Methyldiethanolamin (MDEA), Diethanolamin (DEA) und/oder 2-Amino-2-methyl-1,3-propandiol (AMPD). Insbesondere bevorzugt sind Tris-(hydroxymethyl)-aminomethan (TRIS) und/oder N-Methyldiethanolamin (MDEA).

Ebenso kann es vorteilhaft sein, wenn der Aminoalkohol **A** und/oder dessen Salz in Kombination mit wenigstens einem Zusatzmittel, beispielsweise einem Betonzusatzmittel und/oder einem Mörtelzusatzmittel, verwendet wird. Das wenigstens eine Zusatzmittel umfasst insbesondere einen Entschäumer, einen Farbstoff, ein Konservierungsmittel, ein Fliessmittel, einen Verzögerer, einen Luftporenbildner, einen Schwindreduzierer und/oder einen Korrosionsinhibitor oder Kombinationen davon.

Mit Vorteil beinhaltet das wenigstens eine Zusatzmittel ein Fliessmittel. Dieses beinhaltet im Speziellen ein Polycarboxylat, insbesondere einen Polycaboxylatether. Insbesondere ist das Fliessmittel ein Kammpolymer umfassend ein Polycarboxylatrückgrat mit daran gebundenen Polyetherseitenketten. Die Seitenketten sind dabei insbesondere über Ester-, Ether- und/oder Amidgruppen an das Polycarboxylatrückgrat gebunden.

Entsprechende Polycarboxylatether und Herstellungsverfahren sind beispielsweise offenbart in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden. Die Offenbarung dieser genannten Patentschriften wird hiermit insbesondere durch Bezugnahme eingeschlossen.

Derartige Kammpolymere werden auch von Sika Schweiz AG unter der Handeisnamenreihe ViscoCrete® kommerziell vertrieben.

Falls vorhanden, weist das Fliessmittel bezogen auf das mineralische Bindemittel mit Vorteil einen Anteil von 0.01 - 6 Gew.-%, insbesondere 0.1-4 Gew.-%, weiter bevorzugt 0.5 - 3 Gew.-%, auf. Aufgrund der Kombination mit dem Fliessmittel kann die Verarbeitbarkeit der Bindemittelzusammensetzung verbessert werden und zugleich werden höhere Druckfestigkeiten erreicht. Wie sich gezeigt hat, beeinträchtigt das Fliessmittel die Wirkung des Erhärtungsbeschleunigers dabei kaum oder gar nicht.

Der Aminoalkohol **A** und/oder dessen Salz kann prinzipiell zu jedem Zeitpunkt vor oder während dem Anmachen zum mineralischen Bindemittel gegeben werden.

Beispielsweise kann der Aminoalkohol **A** und/oder dessen Salz dem Anmachwasser beigemischt und mit diesem dem mineralischen Bindemittel beim Anmachen zugegeben werden. Ebenfalls möglich ist es, den Aminoalkohol **A** und/oder dessen Salz vor dem Anmachen direkt mit dem mineralischen Bindemittel zu vermischen und erst anschliessend das Anmachwasser zuzugeben. Die Zugabe des Anmachwassers kann dabei auch zeitlich verzögert, beispielsweise Stunden, Tage oder sogar Monaten später, erfolgen,

Gemäss einer besonders vorteilhaften Variante wird der Aminoalkohol **A** und/oder dessen Salz vor und/oder während einem Mahlprozess des mineralischen Bindemitteln zum mineralischen Bindemittel zugegeben. Dadurch wird der Aminoalkohol **A** und/oder das Salz davon besonders gut mit dem mineralischen Bindemittel vermischt und ein zusätzlicher Mischvorgang entfällt. Überraschenderweise wurde gefunden, dass die Wirkung des Aminoalkohols **A** durch den Mahlprozess nicht beeinträchtigt wird. Unter einem Mahlprozess wird dabei insbesondere ein Verfahren verstanden, bei weichem eine mittlere Korngrösse des mineralischen Bindemittels reduziert wird. Dies erfolgt beispielsweise in einer Zementmühle beim Mahlen von Zementklinker, gegebenenfalls zusammen mit inaktiven Stoffen, latenthydraulischen Bindemitteln und/oder puzzolanischen Bindemitteln. Typischerweise wird das mineralische Bindemittel im Mahlprozess auf eine Blaine-Feinheit von wenigstens 500 cm²/g, insbesondere wenigstens 1'000 cm²/g, bevorzugt wenigstens 2'000 cm²/g, noch weiter bevorzugt wenigstens 2'500 cm²/g, gemahlen.

Ein weiterer Aspekt der vorliegenden Erfindung betrifft eine Zusammensetzung enthaltend ein mineralisches Bindemittel und einen wie vorstehend beschriebenen Aminoalkohol **A** der Formel und/oder ein Salz davon. Das Bindemittel kann z.B. in trockener Form oder als eine mit Anmachwasser angemachte fluide oder angesteifte Bindemittelzusammensetzung vorliegen.

Der Aminoalkohol **A** und/oder dessen Salz liegt dabei mit Vorteil in einer Menge von 0.01 - 5 Gew.-%, insbesondere 0.05 - 2 Gew.-%, bevorzugt 0.05 - 0.6 Gew.-%, bezogen auf das Gewicht des mineralischen Bindemittels, vor.

Mit Vorteil ist zudem ein wie vorstehend beschriebenes Zusatzmittel vorhanden. Das Zusatzmittel umfasst insbesondere ein Fliessmittel, bevorzugt ein Polycarboxylatether. Falls vorhanden, weist das Fliessmittel bezogen auf das mineralische Bindemittel mit Vorteil einen Anteil von 0.01 - 6 Gew.-%, insbesondere 0.1-4 Gew.-%, weiter bevorzugt 0.5 - 3 Gew.-%, auf.

In einer weiteren bevorzugten Ausführungsform enthält die Zusammensetzung zusätzlich feste Aggregate, insbesondere Kies, Sand und/oder Gesteinskörnungen. Entsprechende Zusammensetzungen können beispielsweise als Mörtelmischungen oder Betonmischungen eingesetzt werden.

Insbesondere enthält die Zusammensetzung zusätzlich Wasser, wobei ein Gewichtsverhältnis von Wasser zu mineralischem Bindemittel bevorzugt im Bereich von 0.25 - 0.8, insbesondere 0.3 - 0.6, bevorzugt 0.35 - 0.5, liegt. Derartige Bindemittelzusammensetzungen lassen sich als Mörtelmischungen oder Betonmischungen direkt verarbeiten.

Ein zusätzlicher Aspekt der vorliegenden Erfindung bezieht sich auf einen Formkörper, weicher erhältlich ist durch Aushärten einer wie vorstehend beschriebenen Zusammensetzung nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

Weiter bezieht sich die vorliegende Erfindung auf ein Verfahren zur Herstellung einer mineralischen Bindemittelzusammensetzung. Dabei wird ein wie vorstehend beschriebener Aminoalkohol **A** gemäss Formel mit einem mineralischen Bindemittel, insbesondere einem zementösen Bindemittel, vermischt. Das mineralische Bindemittel kann dabei wie vorstehend beschreiben vorliegen und insbesondere die oben genannten latenthydraulischen und/oder puzzolanischen Bindemittel enthalten,

### Ausführungsbeispiele

### 1 , Verwendete Substanzen und Methoden

### 1,1 Aminoalkohole

Folgende Aminoalkohole wurden für die Ausführungsbeispiele verwendet (Tabelle 1):

**Tabelle 1**

| **Abkürzung :** | **Substanz** | **CAS-#** | **Verwendungsform** |
|---|---|---|---|
| MDiPA | N-Methyldiisopropanolamin | 4402-30-6 | Reinsubstanz |
| DiPA | Diisopropanolamin | 110-97-4 | 50 Gew.-% in H₂O |
| TiPA | Triisopropanolamin | 122-20-3 | 50 Gew.-% in H₂O |
| TEA | Triethanolamin | 102-71-6 | Reinsubstanz |
| MDEA | N-Methyldiethanolamin | 105-59-9 | Reinsubstanz |
| AMPD | 2-Amino-2-methyl-1,3-propandiol | 115-69-5 | 50Gew.-% in H₂O |

Sämtliche der in Tabelle 1 aufgeführten Substanzen sind kommerziell bei verschiedenen Anbietern in Reinform (Reinheit > 97%) erhältlich.

DiPA, TiPA und AMPD welche in Reinform fest oder hochviskos sind, wurden in Form von wässrigen Lösungen mit den in Tabelle 1 angegebenen Anteilen an Reinsubstanz eingesetzt.

### 1.2 Bereitstellung der Erhärtungsbeschleuniger

Die Erhärtungsbeschleuniger wurden jeweils dem Anmachwasser für die Mörtelmischungen zugemischt, welches anschliessend zum Anrühren der Mörtelmischungen verwendet wurde.

### 1.3 Weitere Zusatzmittel

Bei einzelnen der nachstehend beschriebenen Mörtelversuche wurde ein modifiziertes Polycarboxylat in Form von Sika® ViscoCrete®-3081 S als +Fliessmittel eingesetzt. Sika®ViscoCrete®-3081 S ist ein Kammpolymer mit Polycarboxylatrückgrat und über Estergruppen gebundenen Polyalkylenoxid-Seitenketten. Falls eingesetzt, wurde das Fliessmittel in einer Konzentration von 1.0 Gew.-%, bezogen auf das Bindemittel, verwendet und wie die Aminoalkohole vorgängig dem Anmachwasser zugemischt.

### 1.4 Mörtelmischungen

Die Wirksamkeit der erfindungsgemässen Erhärtungsbeschleuniger wurde in verschiedenen Mörtelmischungen getestet.

Die Mörtelmischungen weisen die in Tabelle 2 beschriebenen Trockenzusammensetzungen auf.

**Tabelle 2**

| **Mörtelmischung →** | **M1** | **M2** | **M3** |
|---|---|---|---|
| **↓ Komponente** | | | |
| Portlandzement | | | |
| - CEM 142.5 N | 750g | 525 g | 525 g |
| - Feinheit nach Blaine: 3'600 cm²/g | | | |
| Flugasche/g | 0 g | 225 g | 0 g |
| - Feinheit nach Blaine: 3'900 cm² | | | |
| Schlacke | 0 g | 0 g | 225 g |
| - Feinheit nach Blaine: 3'000 cm²/g | | | |
| Kalksteinfüller | 141 g | | |
| Sand 0-1 mm | 738 g | | |
| Sand 1-4 mm Sand 1-4 mm | 1107 g | | |
| Sand 4-8 mm | 1154g | | |

Als Zement wurde dabei ein Portlandzement vom Typ CEM I 42.5 N (Normo 4; erhältlich bei Holcim Schweiz) mit einer Feinheit nach Blaine von 3'600 cm²/g eingesetzt. Falls verwendet, wurde Flugasche vom Typ Safament (SAFA Saarfilterasche-Vertriebs GmbH & Co. KG) bzw. Schlacke vom Typ Löruns (GBFS; Voestalpin Stahl GmbH, Österreich) eingesetzt.

Zum Anmachen der Mörtelmischungen wurden die Sande, der Kalksteinfüller, der Zement und gegebenenfalls die Flugasche bzw. die Schlacke 1 Minute in einem Hobart-Mischer trocken gemischt. Innerhalb von 30 Sekunden wurde das Anmachwasser, in dem gegebenenfalls das Fliessmittel (1.0 Gew.-% bezogen auf Bindemittel) und gegebenenfalls der Erhärtungsbeschleuniger gelöst oder dispergiert war, zugegeben und noch weitere 2.5 Minuten gemischt. Die Gesamt-Mischzeit nass dauerte jeweils 3 Minuten. Falls ein Fliessmittel eingesetzt wurde, betrugt der Wasser/Zement-Wert (w/z-Wert) 0.4. Ohne Fliessmittel Wasser/Zement-Wert (w/z-Wert) 0.52.

### 1.5 Testverfahren,

Zur Bestimmung der Wirksamkeit der Aminoalkohole wurde die Druckfestigkeit von Mörtelmischungen 24 h Stunden bzw. 1 Tag (1 d) nach dem Anmachen der Mörtelmischungen bestimmt. Unmittelbar nach dem Anmachen der Mörtelmischungen wurde auch das jeweilige Ausbreitmass (ABM) gemessen.

Die Prüfung zur Bestimmung der Druckfestigkeit (in N/mm²) erfolgte an Prismen (40 x 40 x 160mm) gemäss Norm EN 12390-1 bis 12390-4. Das Ausbreitmass (ABM) des Mörtels wurde gemäss EN 1015-3.

### 2. Mörteltests

Die in Kapitel 1.1 genannten Aminoalkohole wurden in unterschiedlichen Dosierungen als Erhärtungsbeschleuniger in verschiedenen Mörtelmischungen eingesetzt.

Daraufhin wurden, wie vorstehend beschrieben (Kapitel 1.4), die Druckfestigkeit sowie das Ausbreitmass der jeweiligen Mörtelmischungen bestimmt. Zu Vergleichszwecken wurde jeweils auch eine Referenzprobe gemessen, welche keinen Erhärtungsbeschleuniger bzw. Aminoalkohol enthält (Dosierung = 0 Gew.-%), ansonsten aber eine identische Zusammensetzung aufweist wie die übrigen Mörteltests.

Tabelle 3 gibt einen Überblick über die Wirkung von MDiPA in den Mörtelmischungen **M1, M2** und **M3** bei verschiedenen Dosierungen. Die Mörteltests wurden dabei ohne Zusatz eines Fliessmittels und bei einem w/z-Wert von 0.52 durchgeführt. Das Ausbreitmass unmittelbar nach Anmachen der Mörtelmischungen lag im Bereich von 165-175 mm. Die Dosierungen beziehen sich auf den gesamten Bindemittelgehalt (Zement plus gegebenenfalls Flugasche bzw. Schlacke). Die Spalten "1d-Festigkeit" geben die gemessenen Druckfestigkeiten nach 1 Tag bzw. 24 Stunden an. Die Spalten "Δ" geben die prozentualen Druckfestigkeitssteigerungen verglichen mit der Referenzprobe ohne MDiPA (Dosierung = 0 Gew.-%) an.

**Tabelle 3**

| **Dosierung** MDiPA [Gew.-%] | **M1** | | **M2** | | **M3** | |
|---|---|---|---|---|---|---|
| | 1d-Festigkeit | Δ | 1d-Festigkeit | Δ | 1d-Festigkeit | Δ |
| | [MPa] | [%] | [MPa] | [%] | [MPa] | [%] |
| 0 | 9.7 | 0 | 7.2 | 0 | 6.6 | 0 |
| 0.05 | 12.0 | 24 | 7.9 | 10 | 9.4 | 42 |
| 0.15 | 13.6 | 40 | 10.2 | 42 | 9.3 | 41 |
| 0.50 | 14.8 | 53 | 9.8 | 36 | 9.0 | 36 |
| 1.50 | 14.6 | 51 | 8.2 | 14 | 6.9 | 5 |

Aus Tabelle 3 ist ersichtlich, dass MDiPA, als Vertreter eines erfindungsgemässen Aminoalkohols **A**, in Mörtelmischungen mit Portlandzement als alleinigem Bindemittel (Mörtelmischung **M1**) als auch in Mörtelmischungen mit Bindemitteln basierend auf Portlandzement/Flugasche-Mischungen (Mörtelmischung **M2**) und Portlandzement/Schlacke-Mischungen (Mörtelmischung **M3**) ausgezeichnete 1-Tagesdruckfestigkeitssteigerungen von bis zu 53% ergibt. Die optimalen bzw. bestwirksamen Konzentrationen sind dabei mit 0.50 Gew.-% (Mörtelmischung **M1**) bzw. 0.15 Gew.-% (Mörtelmischungen **M2** und **M3**) relativ gering, was aus ökonomischer und umweittoxikologischer Sicht interessant ist.

Tabelle 4 zeigt die Wirkung verschiedener Aminoalkohole in Mörtelmischungen vom Typ **M1**. Sämtliche den Resultaten in Tabelle 4 zu Grunde liegende Mörteltests wurden dabei ohne Zusatz eines Fliessmittels und bei einem w/z-Wert von 0.52 durchgeführt. Für jeden Aminoalkohol ist in Tabelle 4 jeweils die optimale Dosierung (Spalte "Dosierung") angegeben, welche für den jeweiligen Aminoalkohol die höchste Druckfestigkeitssteigerung ergibt. Die optimalen Dosierungen wurden wie bei MDiPA (Tabelle 2) anhand von Testversuchen, welche für jeden Aminoalkohol bei unterschiedlichen Dosierungen durchgeführt wurden, ermittelt. Die Spalte "Δ" gibt die zur optimalen Dosierung zugehörige prozentuale Druckfestigkeitssteigerungen verglichen mit einer Referenzprobe ohne Aminoalkohol bzw. Erhärtungsbeschleuniger (Dosierung = 0 Gew.-%) an Das Ausbreitmass unmittelbar nach Anmachen der Mörtelmischungen lag bei optimalen Dosierungen der Aminoalkohole im Bereich von 172-180 mm.

Die Dosierungen beziehen sich wiederum auf den gesamten Bindemittelgehalt (Zement plus gegebenenfalls Flugasche bzw. Schlacke). Bei DiPA, TiPA und AMPD beziehen sich die Dosierungen zudem auf die in Kapitel 1.1 genannten Lösungen, bei den übrigen Aminoalkoholen auf die jeweilige unverdünnte Substanz in Reinform (Reinheit > 97%).

**Tabelle 4**

| **Aminoalkohol** | **Dosierung [Gew.-%]** | **Δ [%]** |
|---|---|---|
| Ohne | 0 | 0 |
| MDiPA | 0.50 | 53 |
| DiPA | 1.50 | 21 |
| TiPA | 0.40 | 23 |
| TEA | 0.15 | 15 |
| MDEA | 0.05 | 21 |
| AMPD | 0.5 | 21 |

Die den Resultaten in Tabelle 5 zu Grunde liegenden Mörteltests entsprechen im Wesentlichen den im Zusammenhang mit Tabelle 4 durchgeführten Mörteltests. Bei den zu Tabelle 5 gehörenden Mörteltest wurde jedoch jeweils wie in Kapitel 1.3 beschrieben zusätzlich Sika® ViscoCrete®-3081 S als Fliessmittel beigemischt (1.0 Gew.-%, bezogen auf Bindemittelgehalt) und das w/z-Verhältnis auf 0.40 gesenkt. Das Ausbreitmass unmittelbar nach Anmachen der Mörtelmischungen lag bei optimalen Dosierungen der Aminoalkohole im Bereich von 191- 215 mm.

**Tabelle 5**

| **Aminoalkohol** | **Dosierung [Gew.-%]** | **Δ [%]** |
|---|---|---|
| Ohne | 0 | 0 |
| MDiPA | 0.20 | 37 |
| DiPA | 1.0 | 32 |
| TiPA | 1.0 | 32 |
| TEA | 0.05 | 10 |
| MDEA | 0.15 | 21 |
| AMPD | 1.5 | 27 |

Aus den Tabellen 4 und 5 ist ersichtlich, dass die Verwendung von erfindungsgemässen Aminoalkoholen, mit und ohne Zusatz von Fliessmittel, verglichen mit anderen Aminoalkoholen zu einzigartig hohen Druckfestigkeitssteigerungen nach 1 Tag bzw. 24 Stunden führt. Die gemessenen Werte für die Ausbreitmasse zeigen zudem, dass entsprechend beschleunigte Mörtelmischungen auch zugleich gut verarbeitbar sind.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verwendung eines Aminoalkohols **A** und/oder eines Salzes des Aminoalkohols **A** Hals Erhärtungsbeschleuniger für mineralische Bindemittel, insbesondere zementöse Bindemittel, wobei der Aminoalkohol **A** eine Struktur gemäss Formel aufweist: 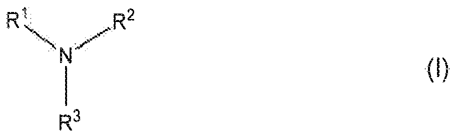
und wobei
a) R¹ und R² unabhängig voneinander je eine Alkanolgruppe mit 3 - 4 Kohlenstoffatomen darstellen,
b) R³ ein organischer Rest mit 1 - 8 Kohlenstoffatomen ist,
c) R³ verschieden ist von R¹ und/oder R².

2. Verwendung nach einem der vorangehenden Ansprüche, **dadurch gekennzeichnet, dass** R¹ und/oder R² für eine Isopropanolgruppe steht.

3. Verwendung nach einem der vorangehenden Ansprüche, **dadurch gekennzeichnet, dass** R³ eine Alkylgruppe, eine Cycloalkylgruppe, eine Alkylarylgruppe, eine Arylgruppe, eine Alkoxygruppe, eine Alkanolgruppe, oder eine Aminoalkylgruppe darstellt.

4. Verwendung nach einem der vorangehenden Ansprüche, **dadurch gekennzeichnet, dass** R³ eine Alkylgruppe, insbesondere mit 1 6 Kohlenstoffatomen, bevorzugt mit 1 - 3 Kohlenstoffatomen, darstellt.

5. Verwendung nach einem der vorangehenden Ansprüche, **dadurch gekennzeichnet, dass** der Aminoalkohol **A** ein N-Alkyldiisopropanolamin ist.

6. Verwendung nach einem der vorangehenden Ansprüche, **dadurch gekennzeichnet, dass** der Aminoalkohol **A** N-Methyldiisopropanolamin, **N-**Ethyldiisopropanolamin oder N-Propyldiisopropanolamin ist.

7. Verwendung nach einem der vorangehenden Ansprüche, **dadurch gekennzeichnet, dass** der Aminoalkohol **A** N-Methyldiisopropanolamin ist.

8. Verwendung nach einem der vorangehenden Ansprüche, **dadurch gekennzeichnet, dass** der Aminoalkohol **A** und/oder dessen Salz in einer Menge von 0.01 - 5 Gew.-%, insbesondere 0.05 - 2 Gew.-%, bezogen auf das Gewicht des mineralischen Bindemittels, verwendet wird.

9. Verwendung nach einem der vorangehenden Ansprüche, **dadurch gekennzeichnet, dass** der Aminoalkohol **A** und/oder dessen Salz in Kombination mit wenigstens einer weiterer erhärtungsbeschleunigenden Substanz eingesetzt wird.

10. Verwendung nach einem der vorangehenden Ansprüche, **dadurch gekennzeichnet, dass** das mineralische Bindemittel wenigstens 5 Gew.-%, bevorzugt wenigstens 35 Gew.-%, eines hydraulischen Bindemittels, bevorzugt Zement, enthält.

11. Verwendung nach einem der vorangehenden Ansprüche, **dadurch gekennzeichnet, dass** das mineralische Bindemittel 5-95 Gew.-%, insbesondere 5-65 Gew.-%, eines latenthydraulischen und/oder puzzolanischen Bindemittels, insbesondere Schlacke und/oder Flugasche, enthält.

12. Verwendung nach einem der vorangehenden Ansprüche, **dadurch gekennzeichnet, dass** der Aminoalkohol **A** und/oder dessen Salz vor und/oder während einem Mahlprozess des mineralischen Bindemittels zum mineralischen Bindemittel zugegeben wird.

13. Zusammensetzung enthaltend ein mineralisches Bindemittel, insbesondere ein zementöses Bindemittel, sowie einen Aminoalkohol **A** und/oder ein Salz des Aminoalkohols **A**, wobei der Aminoalkohol **A** eine Struktur ge-mäss Formel aufweist: 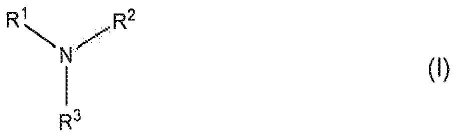
und wobei
a) R¹ und R² unabhängig voneinander je eine Alkanolgruppe mit 3 - 4 Kohlenstoffatomen darstellen,
b) R³ ein organischer Rest mit 1 - 8 Kohlenstoffatomen ist,
c) R³ verschieden ist von R¹ und/oder R².

14. Formkörper, erhältlich durch Aushärten einer Zusammensetzung nach Anspruch 13,

15. Verfahren zur Herstellung einer Zusammensetzung nach Anspruch 13, wobei ein Aminoalkohol **A** und/oder ein Salz des Aminoalkohols **A** mit einem mineralischen Bindemittel, insbesondere einem zementösen Bindemittel, vermischt wird.
